(19) Europäisches Patentamt
European Patent Office
Office européen des brevets

(11) Veröffentlichungsnummer: **0 040 789**
**B1**

(12) **EUROPÄISCHE PATENTSCHRIFT**

(45) Veröffentlichungstag der Patentschrift: **30.10.85**

(21) Anmeldenummer: **81103827.2**

(22) Anmeldetag: **19.05.81**

(51) Int. Cl.⁴: **C 08 F 8/14,** C 08 F 246/00, C 09 D 3/80 // (C08F246/00, 220:28, 220:04, 222:02, 222:20)

# (54) Verfahren zur Herstellung von hydroxylgruppenhaltigen Copolymerisaten und deren Verwendung.

(30) Priorität: **24.05.80 DE 3019959**

(43) Veröffentlichungstag der Anmeldung: **02.12.81 Patentblatt 81/48**

(45) Bekanntmachung des Hinweises auf die Patenterteilung: **30.10.85 Patentblatt 85/44**

(84) Benannte Vertragsstaaten: **AT CH DE GB LI**

(56) Entgegenhaltungen: **DE-B-1 038 754**
**DE-B-2 626 900**

(73) Patentinhaber: **HOECHST AKTIENGESELLSCHAFT**
**Postfach 80 03 20**
**D-6230 Frankfurt am Main 80 (DE)**

(72) Erfinder: **Mondt, Josef, Dr.**
**Altkönigstrasse 24d**
**D-6240 Königstein/Taunus (DE)**
Erfinder: **Rinno, Helmut, Dr.**
**Goethestrasse 38**
**D-6238 Hofheim am Taunus (DE)**

**Die Akte enthält technische Angaben, die nach dem Eingang der Anmeldung eingereicht wurden und die nicht in dieser Patentschrift enthalten sind.**

**EP 0 040 789 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

**Beschreibung**

Der Anmelder hat zur Abgrenzung von der älteren, nicht vorveröffentlichten deutschen Patentanmeldung P 30 05 945.1 gesonderte Patentansprüche für die Bundesrepublik Deutschland vergelegt.

Die Herstellung von hydroxylgruppenhaltigen Copolymerisaten wird in der Literatur ausführlich beschrieben. Diese Produkte finden als Bindemittel für Einbrennbeschichtungen eine breite Anwendung. Für die Herstellung dieser Copolymerisate sind drei verschiedene Rekationswege möglich.

Am häufigsten wird die Copolymerisation von ungesättigten Monomeren, wie Acrylsäureester, Methacrylsäureester und Vinylverbindungen, mit ungesättigten Monomeren mit einer Hydroxylgruppe, z.B. 2-Hydroxyäthylacrylat, beschrieben.

Weiterhin sind Copolymerisate bekannt, die Glycidylgruppen als Seitengruppen enthalten, z.B. über die Copolymerisation der genannten Monomeren mit Glycidylmethacrylat. Die im Copolymerisat vorhandenen Glycidylgruppen können z.B. nach der Polymerisation in Form einer polymeranalogen Umsetzung mit H-aciden Verbindungen über eine Additionsreaktion zu hydroxylgrüppenhaltigen Polymerisaten führen.

Der dritte Weg führt über ein Copolymerisat, das Carboxylgruppen enthählt, z.B. durch die Copolymerisation der obengenannten Monomeren mit Acrylsäure, Methacrylsäure oder Maleinsäure. Eine Veresterungsreaktion mit Epoxiden ergibt dann ebenfalls hydroxylgruppenhaltige Copolymerisate.

Die Umsetztung der carboxylgruppenhaltigen Copolymerisate mit Epoxiden kann nach zwei verschiedenen Methoden erfolgen, nämlich

1. durch eine polymeranaloge Umsetzung der säurehaltigen Copolymerisate mit Epoxiden im Anschluß an die Polymerisation oder

2. durch eine in situ Reaktion, bei der die Polymerisation und die Versesterung gleichzeitig im Reaktions-gemisch abläuft. Neben dem Polymerisationskatalysator kann gleichzeitig auch noch ein Veresterungskatalysator anwesend sein (DE-PS 1.038.754, DE-OS 1.520.610), der bewirkt, daß parallel zur Polymerisation auch die Veresterung vollständig abläuft. Eine Variante der in situ Reaktion besteht darin, die Addition ohne Mitwirkung eines Katalysators durchzuführen (DE-PS 1 520 688 und DE-AS 2 603 259). Danach eignen sich für die katalysatorfreie in situ-Veresterung besonders Glycidylester der allgemeinen Formel

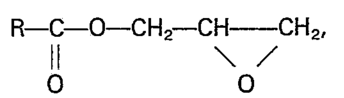

die im Gegensatz zu den aliphatischen Monoepoxiden, z.B. Propylenoxid, auch ohne Veresterungskatalysatoren in üblichen Reaktionszeiten zu praktisch quantitativen Umsätzen führen. Besonders häufig wird der Versaticsäureglycidylester eingesetzt (DE-AS 2.603.259).

Die DE-PS 26 26 900 beschreibt die Herstellung von Hydroxylgruppen enthaltenden Copolymeren mit Säurezahlen zwischen 6 und 12 aus Styrol, Methylmethacrylat, Hydroxyäthylmethacrylat, Acrylsäure und Glycidylestern von verzweigten Alkanmonocarbonsäuren in ganz bestimmten gegenseitigen Mengenverhältnissen. Die Verwendung von Glycid als Epoxydkomponente ist dort nicht offenbart.

Aufgabe der vorliegenden Erfindung ist es, hydroxylgruppenhaltige Copolymerisate durch eine in situ Erzeugung von Hydroxylgruppen während oder nach der Copolymerisation und ohne Verwendung eines Veresterungskatalysators zur Verfügung zu stellen.

Gegenstand der vorliegenden Erfindung ist ein Verfahren zur Herstellung von in organischen Lösenmitteln löslichen hydroxylgruppenhaltigen Copolymerisaten durch Polymerisation und Veresterung von a) α, ß-olefinisch ungesättigten Carbonsäuren mit b) einem oder mehreren olefinisch ungesättigten copolymerisierbaren Monomeren und c) epoxygruppenhaltigen Verbindungen in Gegenwart von Polymerisationskatalysatoren und vorteilhaft Reglern und vorzugsweise ohne Veresterungskatalysatoren, unter Erhitzen bis +150°C, das dadurch gekennzeichnet ist, daß als epoxygruppenhaltige Verbindung c) Glycid

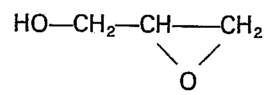

für sich oder im Gemisch mit Glycidylestern, die 12 bis 19 C-Atome enthalten und sich von gesättigten Fettsäuren ableiten, eingesetzt wird, wobei die Zahl der Epoxydgruppen der der Carboxylgruppen wenigstens äquivalent ist und in den Gemischen die Äquivalentmenge an Glycidylestern höchstens doppelt so groß ist wie die an Glycid. Glycid ist die einfachste chemische Verbindung, die im Molekül eine Epoxidgruppe und eine primäre Alkoholgruppe enthählt. Das Glycid, das bevorzugt allein verwendet wird, bzw. das Gemisch mit dem Glycidylester wird bevorzugt vorgelegt oder dem Reaktionsgemisch während der Herstellung der Copolymerisate zugesetzt. Dann wird es vorteilhaft mit den ungesättigten Monomeren in einer Zudosiervorrichtung gemischt. Bei der bevorzugten Ausführungsform wird das Glycid in der Vorlage im Lösemittel, gegebenenfalls noch mit weiteren Comonomeren gelöst; dass wird die Monomerenmischung bei erhöhter Temperatur im allgemeinen von 80 bis 150°C, bevorzugt zwischen 100 und 140°C und zweckmäßig mit dem Polymerisationskatalysator und dem Regler—zodosiert und gleichzeitig polymerisiert und verestert.

Gegenüber der alleinigen Verwendung eines Glycidylesters von gesättigten, verzweigten Monocarbonsäuren, wie sie in der DE-PS 26 26 900 beschrieben ist, hat die Verwendung des Glycids die Vorteile, daß bei seinem Einbau in das Copolymerisat unter gleichzeitiger Veresterung noch freie Hydroxylgruppen entstehen und daß dabei ein Molekül von wesentlich geringerer Masse, verglichen mit dem Fettsäureglycidylester, eingebaut wird. Man erhält somit ein Copolymerisat mit einer höheren Funktionalität und trotzdem einer geringeren Masse als beim Einbau der Glycidylester, da die letzteren nur den Oxiranring als einzige funktionelle Gruppe aufweisen.

Das Verfahren kann in Substanz ausgeführt werden. Bevorzugt arbeitet man jedoch in organischen Lösemitteln wie aliphatischen oder aromatischen Kohlenwasserstoffen, Estern, Äthern und Esteräthern. Besonders bevorzugt sind z.B. Toluol, Xylol, Monoglykolätheracetate oder Gemische aus diesen Lösemitteln.

Der besondere Vorteil der in situ Veresterung mit Glycid ohne Veresterungskatalysator liegt darin, daß man mit einem Additionsschritt gleich zwei Hydroxylgruppen am Polymermolekül einführt. Es ist also möglich, mit wesentlich weniger Material die gleiche Hydroxylkonzentration zu erzeugen wie mit den bischer beschriebenen Glycidylestern (z.B. Versaticsäureglycidylester). Auch die Einstellung von sehr hohen Hydroxylkonzentrationen für die Herstellung von Copolymerisaten mit einem speziellen Anwendungsspektrum (z.B. kampfgasbeständige Lackierungen auf der Basis von extrem hoch vernetzten Polymerisatfilmen) ist mit Glycid besonders einfach durchzuführen.

Die glatte und problemlose Herstellung der Copolymerisate bei gleichzeitig ablaufender Veresterung war überraschend, weil das Glycid in der Literatur als reaktive Verbindung beschrieben wird und auch mit sich selbst zu Polyglycid reagieren bzw. eine Vielzahl von unkontrollierten Nebenreaktionen eingehen kann (Chemiker-Zeitung *1975*, 19—25). Außerdem war auch von der Molekülstruktur her ein Reaktionsverhalten zu erwarten, das mehr den aliphatischen Monoepoxiden, z.B. Propylenoxid, entspricht.

Es war auch überraschend, daß die in situ Veresterung mit Glycid ohne die bekannten Veresterungskatalysatoren in den kurzen Reaktionszeiten möglich ist, die in der Patentliteratur von den Glycidylestern beschrieben werden. Diese unterscheiden sich signifikant von den Reaktionsabläufen mit aliphatischen Monoepoxiden, wie Äthylenoxid, Propylenoxid oder Buten-2-oxid, mit denen nur mit spezifisch wirksamen Veresterungskatalysatoren befriedigende Umsätze erhalten werden können (DE-PS 1.038.754). Durch das neue Verfahren wird auch die Bildung unerwünschter Katalysatorrückstände in den Lösungen der Polymerisate bzw. den Polymerisaten selbst vermieden und auch eine störende Verfärbung der Produkte, die sonst häufig auftritt und die Produkte z.B. für einen Einsatz in Klarlacken oder in Weißlacken unbrauchbar macht bzw. auf Buntlacke beschränkt. Ferner wird ein unerwünschter Einfluß der Veresterungskatalysatoren auf die Molekulargewichtsverteilung der Copolymerisate vermieden.

Die in situ Umsetzung führt zu wasserklaren Polymerisatlösungen, deren Jodfarbzahl nach DIN 6162 im Bereich von 1 und deren Restsäurezahl nach den technisch üblichen Reaktionszeiten unter 10 liegt.

Wenn man Veresterungskatalysatoren, z.B. die literaturbekannten (vgl. DE-PS 1 038 754 und DE-OS 1 520 610) auf organischer oder anorganischer Basis-z.B. Cr(III)—Salze—mit-verwendet, kann die Säurezahl noch erniedrigt werden, aber die Copolymerisatlösungen werden vielfach farblich verändert; sie sind dann nur für die Herstellung von Buntlacken geeignet.

Die ungesättigten Carbonsäuren werden im allgemeinen in einer Menge von 0,5 bis 14, vorzugsweise von 3 bis 12 und insbesondere von 8 bis 12 Gew.-%, berechnet auf den Feststoffanteil im Endprodukt (das sind also nicht nur die Monomeren, sondern auch das Glycid, der Katalysator und der Regler) eingesetzt. Beispiele sind Fumar-, Itacon- und Crotonsäure, vorzugsweise aber Acryl-, Methacryl- und Maleinsäure. Von den zweibasischen Säuren können auch die Monoester, z.B. von Alkanolen mit 1 bis 12 C-Atomen eingesetzt werden.

Beispiele für die ungesättigten Monomeren b) sind Ester der Acryl- und Methacrylsäure mit einwertigen geradkettigen oder verzweigten Alkoholen mit 1 bis 12 C-Atomen und/oder Nitrile und Säureamide von olefinisch ungesättigten Carbonsäuren, Anstelle von oder zusammen mit den Acryl- bzw. Methacrylsäurederivaten können die üblichen Vinylverbindungen wie Styrol, die verschiedenen Vinyltoluole und Vinylxylole, Vinylacetat, Vinylpropionat und Vinylchlorid und/oder Vinylidenverbindungen eingesetzt werden, wie α-Chlor- und α-Methylstyrol, Vinylidenfluorid und Vinylidenchlorid. Bevorzugte Monomere für die Herstellung von hydroxylgruppenhaltigen Copolymerisaten gemäß der Erfindung sind Styrol, die verschiedenen Vinyltoluole, Methyl-, Äthyl-, n- und iso-Propyl-, n-, iso-, sek. und tert.-Butyl-, 2-Äthylhexyl-und Laurylacrylat bzw. -methacrylat.

Als Glycidylester kommen vorzugsweise solche verzweigter Fettsäuren mit der allgemeinen Formel

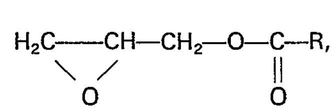

worin R 8 bis 15, vorzugsweise 8 bis 12 C-Atome hat, der Rest einer verzweigten Fettsäure ist und in α-Stellung einen oder zwei Alkylsubstituenten hat.

Das Glycid bzw. das Gemisch mit dem Glycidylester wird im allgemeinen in einem geringen

Überschuß, zweckmäßig von 1 bis 15, bevorzugt von 3 bis 8 Äquivlaentprozent in Bezug auf die Carboxylgruppen des Ausgangsgemisches eingesetzt.

Die erfindungsgemäß erhaltenen Copolymerisate haben im allgemeinen einen Hydroxylgruppengehalt von 1,5 bis 6,5, bevorzugt von 3,5 bis 5,0 Gew.-%, bezogen auf den Feststoffanteil im Endprodukt.

Für bezondere Anwendungsgebiete der hydroxylgruppenhaltigen Copolymerisate im Bereich der Oberflächenbeschichtung kann eine Mitverwendung von anderen hydroxylgruppenhaltigen Verbindungen, z.B. Hydroxyäthyl- und Hydroxylpropyl-acrylat bzw. -methacrylat bei der Copolymerisation von Vorteil sein. Der Anteil dieser Verbindungen beträgt jedoch zweckmäßig nicht mehr als 30 Gew.-% des Feststoffgehlates im Endprodukt.

Als Polymerisationskatalysatoren verwendet man bevorzugt organische Peroxide, die in einem Temperaturbereich von 80 bis 150°C eine Halbtwertszeit im Bereich von 2 bis 5, bevorzugt von 3 bis 4 Stunden aufweisen. Sie werden im allgemeinen in einem Bereich von 0,1 bis 4 Gew.%, vorzugsweise von 0,5 bis 3 Gew.-% der Summe der Monomeren zugesetzt. Beispiele sind sind t-Butyl-hydroperoxid, Di-t-Butylperoxid, t-Butylperbenzoat, Cumolhydroperoxid und t-Butylperoctoat.

Also Molekulargewichtsregler werden bevorzugt Mercaptane, im allgemeinen in einer Menge von 0,2 bis 3,0 Gew-% der Summe der Monomerenmischung eingesetzt, besonders langkettige Mercaptane, z.B. Laurylmercaptan.

Die Copolymerisatlösungen, die nach dem neuen Verfahren hergestellt werden, weisen im allgemeinen Festkörperkonzentrationen von 50 bis 70 Gew.-% auf. Die Copolymerisate bzw. ihre Lösungen finden Verwendung als Bindemittel für lufttrocknende Zwei-Komponentenlacke oder ofenhärtende Lacke, wobei sie insbesondere für die Verarbeitung zu ofenhärtenden Lacken vorteilhaft mit Epoxyd- und/oder verätherten Aminoplastharzen gemischt werden.

Die erhaltenen Überzüge und Beschichtungen haben überraschende Eigenschaften, insbesondere hervorragende Wetterbeständigkeit und Vergilbungsresistenz. Weitere deutliche Vorteile bestehen in der raschen Antrocknung bei Raumptemperatur und der schnellen Durchtrocknung der aufgetragenen Lackfilme. Als Unterlagen eignen sich poröse oder nicht-poröse Substrate der verschiedensten Art, wie textile Produkte, Leder, Kunststoffe und Holz. Besonders hervorgehoben sie die Herstellung von Überzügen auf metallischen Untergründen.

Für die Herstellung von Oberflächenbeschichtungen nach dem Zweikomponentenverfahren wird das hydroxylgruppenhaltige Copolymerisat mit Polyisocyanaten, z.B. Diisocyanaten, oder Epoxydharzen oder auch Kombinationen von Polyisocyanaten und Epoxydharzen umgesetzt, Z.B. kann man durch Umsetzung des Copolymerisats mit Polyisocyanaten oder Epoxidharzen in solchen Mengen, daß 0,5 bis 1,5, vorzugsweise 0,8 bis 1,3 NCO- oder Epoxy-Gruppen auf eine Hydroxylgruppe vorliegen, lufttrocknende Lacke herstellen. Dabei kann die Trocknung der Zweikomponentengemische bei Raumtemperatur durch Trocknungskatalysatoren, z.B. Dibutylzinndilaurat oder tertiäre Amine oder Mischungen daraus verbessert werden. Zur Verwendung bringt man die Mischungen aus dem lösemittelhaltigen Copolymerisat und den Polyisocyanaten oder Epoxiden nach dem Zusatz von üblichen Hilfsmitteln, wie Verlaufsmitteln, Pigmenten und Farbstoffen durch Spritzen, Tauchen, Gießen, Bürsten oder andere geeignete Maßnahmen auf die Unterlagen auf und trocknet die Lackfilme entweder bei erhöhter Temperatur im Einbrennofen oder bei Raumtemperatur. Die Art der Trocknung richtet sich nach dem Substrat und den von der Praxis gestellten Anforderungen. Auch eine Mischung der reaktiven Vernetzungspartner der hydroxylgruppenhaltigen Copolymerisate kann von Vorteil sein, z.B. eine Mischung aus Polyisocyanaten und reaktiven Melaminharzen. Durch diese Maßnahme wird häufig der Glanz und der Verlauf der Oberflächenbeschichtungen günstig beeinflußt.

In den folgenden Beispielen beziehen sich T auf Gewichtsteile und % auf Gewichtsprozent. Der Feststoffgehalt wurde jeweils nach DIN 53183, die Säurezahl (SZ) nach DIN 53402, die Jodfarbzahl nach DIN 6162 und die Hydroxylzahl (OHZ) nach DIN 53783 bestimmt.

Beispiele:

1) In einem mit Rührer, Rückflußkühler und Thermometer ausgerüsteten Kolben werden 520 T Essigsäure-(2-äthoxyäthyl)-ester (Äthylglykolacetat) auf 130°C erhitzt und ein Gemisch aus 450 T Styrol, 80 T Acrylsäure, 8 T Di-T-Butylperoxid und 5 T Laurylmercaptan in zwei Stunden gleichmäßig zudosiert. Danach wird bei 140°C noch für zwei Stunden gerührt.

Bei 120°C wird der Polymerisatlösung dann im Verlauf von 2 Stunden eine Lösung von 85 T handelsüblichem Glycid in 120 T Äthylglykolacetat unter Rühren zugesetzt. Anschließend wird noch 3 Stunden bei 135°C nachgerührt.
Feststoff 50%; ZS 8; Jodfarbzahl 1.

2) Beispiel 1 wird wiederholt, aber der Glycid-Lösung wird 1,5 T Chrom(III)octoat als Veresterungskatalysator zugesetzt. Das Endprodukt ist deutlich grün gefärbt.
Feststoff 50%; SZ 4; Jodfarbzahl 8—10.

3) In einer Apparatur nach Beispiel 1 werden 520 T Äthylglykolacetat unter Rühren auf 130°C. Man dosiert innerhalb von zwei Stunden 450 T Methylmethacrylat, 80 T Acrylsäure, 8 T Di-t-Butylperoxid und 8 T Laurylmercaptan zu. Anschließend wird bei 120°C eine Lösung von 85 T Glycid (Handelsware) in 110 T Äthylglykolacetat zugetropft und vier Stunden bei 140°C nachgerührt.
Feststoff 50%; SZ 6—7; Jodfarbzahl 1.

4) Beispiel 2 wird wiederholt, aber mit der

Erweiterung, daß der nach den Glycid-Zugabe 5 T Triäthylamin in die Reaktionsmischung eingeschleust werden. Durch die Katalysatorzugabe wird die Harzlösung verfärbt. Sie ist deshalb nur für Buntlackierungen zu verwerten.
Feststoff 50%; SZ 4; Jodfarbzahl 15.

5) In einer Apparatur nach Beispiel 1 werden 250 T Äthylglykolacetat und 50 T Glycid unter Rühren auf 130°C erhitzt. Dann werden über vier Stunden 80 T Styrol, 85 T 2-Äthylhexylacrylat, 116 T Methylmethacrylat, 110 T Hydroxyäthylacrylat, 45 T Acrylsäure, 12 T t-Butylperbenzoat und 5 T t-Dodecylmercaptan zudosiert. Anschließend wird bei 140°C noch vier Stunden nachgerührt. Die Copolymerisatlösung wird bei 100°C mit 100 T Äthylglykolacetat verdünnt.
Feststoff 60 %; SZ 7—8; Jodfarbzahl 1—2.

6) In einer Apparatur nach Beispiel 1 werden 250 T Äthylglykolacetat und 50 T Glycid unter Rühren auf 130°C aufgeheizt. Man dosiert über vier Stunden 80 T Styrol, 80 T Butylacrylat, 116 T Methylmethacrylat, 110 T Hydroxyäthylacrylat, 45 T Acrylsäure, 12 T t-Butylhydroperoxid und 5 T Laurylmercaptan zu. Anschließend wird bei 140°C noch sechs Stunden nachgerührt. Bei 120°C wird die Reaktionslösung mit 100 T Äthylglykolacetat verdünnt.
Feststoff 59%; SZ 7; Jodfarbzahl 1—2.

7) In einer Apparatur nach Beispiel 1 werden 315 T Äthylglykolacetat und 40 T Glycid unter Rühren auf 135°C aufgeheizt. Man dosiert über vier Stunden 130 T Styrol, 90 T Methylmethacrylat, 40 T Butylacrylat, 35 T Acrylsäure, 5 T t-Butylhydroperoxid und 4 T t-Dodecylmercaptan zu. Anschließend wird bei 140°C noch sechs Stunden nachgerührt.
Feststoff 52%; SZ 5; Jodfarbzahl 1; Glastemperatur $T_G$+21°C.

8) In einer Apparatur nach Beispiel 1 werden 290 T Äthylglykolacetat und 50 T Glycid unter Rühren auf 130°C aufgeheizt. Man dosiert über drei Stunden 160 T Styrol, 116 T Methylmethacrylat, 50 T Butylacrylat, 44 T Acrylsäure, 10 T Di-t-Butylperoxid und 8 T Laurylmercaptan zu. Anschließend wird bei 140°C sechs Stunden nachgerührt. Feststoff 60%; SZ 7; Jodfarbzahl 1—2; Glastemperatur $T_G$+31°C.

9) In einer Apparatur nach Beispiel 1 werden 300 T Äthylglykolacetat und 50 T Glycid unter Rühren auf 125°C aufgeheizt. Man dosiert über 4 Stunden 140 T Styrol, 140 T Methylmethacrylat, 45 T Acrylsäure, 10 T Di-tert.-Butyl-peroxid und 5 T Laurylmercaptan zu. Anschließend wird bei 140°C noch fünf Stunden nachgerührt.
Feststoff 57%; SZ 8; OHZ 170; Jodfarbzahl 1.

10) In einer Apparatur nach Beispiel 1 werden 250 T Äthylglykolacetat, 100 T Xylol und 50 T Glycid unter Rühren auf 130°C aufgeheizt. Man dosiert über vier Stunden 90 T Styrol, 140 T Methylmethacrylat, 45 T Acrylsäure, 10 T Di-t-Butylperoxid und 5 T Laurylmercaptan zu. Anschließend noch fünf Stunden bei 140°C nachgerührt.
Feststoff 56%; SZ 5; OHZ 155; Viskosität nach Gardner-HoldtX; Jodfarbzahl 1.

11) In einer Apparatur nach Beispiel 1 werden 215 T Xylol, 100 T Äthylglykolacetat und 60 T Glycid unter Rühren auf 130°C aufgeheizt. Man dosiert über 5 Stunden 160 T Styrol, 190 T Methylmethacrylat, 55 T Acrylsäure, 6 T Di-t-Butylperoxid und 5 T Laurylmercaptan zu. Anschließend wird noch sechs Stunden bei 140°C nachgerührt.
Feststoff 60%; ZS 4; OHZ 178; Jodfarbzahl 1—2.

12) Aus dem hydroxylgruppenhaltigen Copolymerisat nach Beispiel 6 wird ein Weißlack hergestellt. Die Polymerisatlösung wird zuerst mit Xylol auf einen Feststoffwert von 50% verdünnt. Die verdünnte Polymerisatlösung hat eine Auslaufviskosität nach DIN 53211 von 211 Sekunden. Der Weißlackansatz besteht aus 100 T Polymerisatlösung, 70,5 T Titandioxid (Rutil), 1,5 T Verlaufshilfsmittel (Silikonbasis), 30 T Butylacetat, 20 T Xylol und 20 T hochsiedendem Kohlenwasserstoffgemisch. Diese Mischung wird in einer Kugelmühle 16 Stunden abgerieben. Aschließend mischt man mit 51 T einer 75%igen Lösung eines handelsüblichen polyfunktionellen Umsetzungsprodukts aus 3 Mol Hexamethylendiisocyanat und einem Mol Wasser mit einem NCO-Gehalt von ca. 16%. Der Weißlack hat eine Topfzeit von 15 Stunden und wird auf Glasplatten und auf Stahlbleck aufgespritzt. Die luftgetrockneten Lackfilme haben eine Staubtrocknung von 30 Minuten und Pendelwerte nach DIN 53157 von 225 Sekunden nach 10 Tagen Lufttrocknung. Alle lacktechnischen Prüfwerte bestätigen das gute Ergebnis von Antrocknung und Durchtrocknung. Auch die bei 80°C und 120°C eingebrannten Lackfilme zeigen in der lacktechnischen Ausprüfung sehr gute Werte.

13) Aus dem hydroxylgruppenhaltigen Acrylatharz nach Beispiel 9 wird ein Weißlack formuliert. Die Mischung besteht aus 100 T Polymerisatlösung, 68 T Titandioxid (Rutil), 4 T Verdickerpaste (eine 10 %ige Mischung von Montmorillonitpulver in Xylol/Methanol im Verhältnis 1:1), 2 T Verlaufshilfsmittel auf Silikonbasis, 10 T Butylacetat und 17 T hochsiedendem Kohlenwasserstoffgemisch. Nach der Mischung in einer Kugelmühle werden 38 T des im Beispiel 12 genannten Polyisocyanats eingerührt. Der Weißlack wird auf Glas und auf Stahlblech aufgespritzt. Die luftgetrockneten Lackfilme haben eine Staubtrocknung von 20 Minuten und Pendelwerte nach DIN 53157 von 197 Sekunden nach 10 Tagen Lufttrocknung. Auch die bei 80°C und bei 120°C eingebrannten Lackfilme zeigen hervorragende Prüfwerte.

14) Aus dem hydroxylgruppenhaltigen Copolymerisat nach Beispiel 10 wird ein Weißlack formuliert. In einer Kugelmühle werden 100 T Polymerisatlösung, 58 T Titandioxid (Rutil), 4 T der im Beispiel 13 genannten Verdickerpaste, 2 T Verlaufshilfsmittel auf Silikonbasis, 10 T Butylacetat und 17 T hochsiedendes Kohlenwasserstoffgemisch abgerieben. Dem Weißlack werden noch 40 T der im Beispiel 12 genannten Polyisocyanat-Lösung zugemischt. Der Zweikomponentenlack wird auf Glass und auf Stahlblech aufgespritzt. Die luftgetrockneten Lackfilme zeigen eine Staubtrocknung von 23 Minuten und Pendelwerte nach DIN 53157 von 188 Sekunden nach 10 Tagen Lufttrocknung. Auch die bei 80°C und bei 120°C eingebrannten Lackfilm zeigen gute lacktechnische Prüfwerte.

15) Aus dem hydroxylgruppenhaltigen Polymerisat nach Beispiel 11 werden Weißlack und Metalliclacke formuliert, wobei als reaktive Vernetzerkomponente für die funktionellen Copolymerisate Epoxidharze eingesetzt werden. Die luftgetrockneten Lackfilme haben eine Staubtrocknung von 20 Minuten und Pendelwerte nach DIN 53157 von 222 Sekunden nach 14 Tagen Lufttrocknung. Diese Lackfilme haben eine Xylolbeständigkeit von mehr als zwei Stunden; die Beständigkeit gegenüber 10 %iger Natronlauge liegt oberhalb von 24 Stunden. Auch die üblichen physikalischen und chemischen Prüfungen der Lackfilme führen zu sehr guten Werten.

16) In einer Apparatur nach Beispiel 1 werden 300 T Äthylglykolacetat und 50 T Glycid unter Rühren auf 125°C aufgeheizt. Man dosiert über vier Stunden 140 T Styrol, 140 T Methylmethacrylat, 45 T Acrylsäure und 12 T Di-t-Butylperoxid zu. AnschlieBend wird bei 140°C noch fünft Stunden nachgerührt.
Feststoff 57%; SZ 7; OHZ 170; Jodfarbzahl 1—2.

**Patentansprüche für die Vertragsstaaten: AT, CH, GB, LI**

1. Verfahren zur Herstellung von in organischen Lösemitteln löslichen hydroxylgruppenhaltigen Copolymerisaten durch Polymerisation und Veresterung von

a) α, ß-olefinisch ungesättigten Carbonsäuren mit

b) olefinisch-ungesättigten copolymerisierbaren Monomeren und

c) epoxygruppenhaltigen Verbindungen bei erhöhter Temperatur bis 150°C in Gegenwart von Polymerisationskatalysatoren und vorteilhaft Reglern, dadurch gekennzeichnet, daß als Komponente c) Glycid

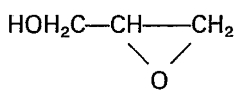

für sich oder im Gemisch mit Glycidylersten mit 12 bis 19 C-Atomen, die sich von gesättigten Fettsäuren ableiten, eingesetzt wird, wobei die Zahl der Epoxydgruppen der der Carboxylgruppen wenigstens äquivalent ist und in den Gemischen die Äquivalentmenge an Glycidylersten höchstens doppelts so groß ist wie die an Glycid.

2. Verfahren nach Anspruch 1, dadurch gekennzeichnet, daß sich die Komponente c), die vorzugsweise aus Glycid besteht, bereits während der Herstellung der Polymerisate im Reaktionsgemisch befindet.

3. Verfahren nach Anspruch 1 oder 2, dadurch gekennzeichnet, daß die Umsetzung im Bereich von 80 bis 150°C, vorzugsweise von 100 bis 140°C durchgeführt wird.

4. Verfahren nach einem oder mehreren der Ansprüche 1 bis 3, dadurch gekennzeichnet, daß die Umsetzung in organischen Lösemitteln und vorzugsweise ohne Veresterungskatalysatoren durchgeführt wird.

5. Verfahren nach einem oder mehreren der Ansprüche 1 bis 4, dadurch gekennzeichnet, daß die Umsetzung solange durchgeführt wird, bis das Copolymerisat einen Hydroxylgruppengehalt von 1,5 bis 6,5, bevorzugt von 3,5 bis 5,0 Gew.-% hat, bezogen auf den Feststoffanteil im Endprodukt.

6. Verfahren nach einem oder mehreren der Ansprüche 1 bis 5, dadurch gekennzeichnet, daß die Komponente b) bis zu 30 Gew.-% aus hydroxylgruppenhaltigen Comonomeren Aufgebaut ist, bezogen auf den Feststoffanteil im Endprodukt.

7. Verfahren nach einem oder mehreren der Ansprüche 1 bis 6, dadurch gekennzeichnet, daß die Komponente a) im Endprodukt in einem Anteil von 0,5 bis 14, vorzugsweise von 3 bis 12 Gew.-% enthalten ist.

8. Verfahren nach einem oder mehreren der Ansprüche 1 bis 7, dadurch gekennzeichnet, daß das Glycid bzw. das Gemisch mit dem Glycidylester in einem Überschuß von 1 bis 15, vorzugsweise von 3 bis 8 Äquivalentprozent, bezogen auf die Carboxylgruppen im Ausgangsgemisch, eingesetzt wird.

9. Verwendung der nach dem Verfahren von einem oder mehreren der Ansprüche 1 bis 8 erhaltenen Produkte für die Herstellung von luft- bzw. ofentrocknenden Beschichtungen, insbesondere in Kombination mit Polyisocyanaten und/oder Epoxidharzen, wobei zweckmäßig 0,5 bis 1,5 und vorzugsweise 0,8 bis 1,3 NCO- oder Epoxygruppen auf eine Hydroxylgruppe verwendet werden.

10. Überzugsmischung, gekennzeichnet durch einen Gehalt an einem Produkt, das nach dem Verfahren eines oder mehrerer der Ansprüche 1 bis 8 hergestellt ist.

**Patentansprüche fur den Vertragstaat: DE**

1. Verfahren zur Herstellung von in organischen Lösemitteln löslichen hydroxylgruppenhaltigen Copolymerisaten durch Polymerisation und Veresterung von

a) α, ß-olefinisch ungesättigten Carbonsäuren mit

b) olefinisch-ungesättigten copolymerisierbaren Monomeren und

c) epoxygruppenhaltigen Verbindungen bei erhöhter Temperatur bis 150°C in Gegenwart von Polymerisationskatalysatoren und vorteilhaft Reglern, dadurch gekennzeichnet, daß als Komponente c) Glycid

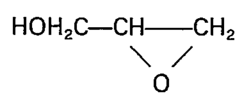

für sich oder im Gemisch mit Glycidylerstern mit 12 bis 19 C-Atomen, die sich von gesättigten Fettsäuren ableiten, eingesetzt wird, wobei die Zahl der Epoxydgruppen der der Carboxylgruppen wenigstens äquivalent ist und in den Gemischen die Äquivalentmenge an Glycidylestern höchstens doppelt so groß ist wie die an Glycid, wobei ausgenommen ist, dass bei Verwendung von Veresterungskatalysatoren die Herstellung gelfreier, Hydroxylgruppen enthaltender und einen Gehalt von 0,25 bis 2,0 Gew.-% Carboxylgruppen aufweisender Polyacrylate aus Veresterungsprodukten von Carboxylgruppen enthaltenden Copolymerisaten auf der Basis copolymerisierter Einheiten der (Meth)acrylsäure, Vinyl-aromaten und (Meth)acrylsäureestern mit Glycid in Gegenwart eines basischen Katalysators bei erhöhter Temperatur in der Weise erfolgt, daß man 1 Carboxyläquivalent eines Copolymerisats aus copolymerisierten statistisch verteilten Einheiten von

3—20 Gew.-% (Meth)Acrylsäure
50—90 Gew.-% Styrol und/oder methylmethacrylat
5—30 Gew.-% Acrylsäurealkylester mit 1—8 Kohlenstoffatomen in der Alkoholkomponente, Methacrylsäurealkylester mit 2—8 C-Atomen in der Alkoholkomponente oder Mischungen der vorgenannten (Meth)Acrylsäureester

mit einem mittleren Molgewicht von etwa 3000—60.000 (gelchromatographisch bestimmt) und einer molekularen Uneinheitlichkeit U von 0,5—2,0, gelöst in einem organischen Lösungsmittel, mit zwischen 0,01 und 0,1 Gew.-% eines tertiären aliphatischen, cycloaliphatischen oder heterocyclischen Amins versetzt und zu dieser Mischung bei einer Temperatur zwischen 100°C und 200°C 0,5 bis 1,3 Mol Glycid kontinuierlich oder diskontinuierlich in einem Zeitraum von 0,2—10 Stunden zudosiert und 4—15 Stunden bei den angegebenen Temperaturen nachrührt.

2. Verfahren nach Anspruch 1, dadurch gekennzeichnet, daß sich die Komponente c), die vorzugsweise aus Glycid besteht, bereits während der Herstellung der Polymerisate im Reaktionsgemisch befindet.

3. Verfahren nach Anspruch 1 oder 2, dadurch gekennzeichnet, daß die Umsetzung im Bereich von 80 bis 150°C, vorzugsweise von 100 bis 140°C durchgeführt wird.

4. Verfahren nach einem oder mehreren der Ansprüche 1 bis 3, dadurch gekennzeichnet, daß die Umsetzung in organischen Lösemitteln und vorzugsweise ohne Veresterungskatalysatoren durchgeführt wird.

5. Verfahren nach einem oder mehreren der Ansprüche 1 bis 4, dadurch gekennzeichnet, daß die Umsetzung solange durchgeführt wird, bis das Copolymerisat einen Hydroxylgruppengehalt von 1,5 bis 6,5, bevorzugt von 3,5 bis 5,0 Gew.-% hat, bezogen auf den Feststoffanteil im Endprodukt.

6. Verfahren nach einem oder mehreren der Ansprüche 1 bis 5, dadurch gekennzeichnet, daß die Komponente b) bis zu 30 Gew.-% aus hydroxylgruppenhaltigen Comonomeren aufgebaut ist, bezogen auf den Feststoffanteil im Endprodukt.

7. Verfahren nach einem oder mehreren der Ansprüche 1 bis 6, dadurch gekennzeichnet, daß die Komponente a) im Endprodukt in einem Anteil von 0,5 bis 14, vorzugsweise von 3 bis 12 Gew.-% enthalten ist.

8. Verfahren nach einem oder mehreren der Ansprüche 1 bis 7, dadurch gekennzeichnet, daß das Glycid bzw. das Gemisch mit dem Glycidylester in einem Überschuß von 1 bis 15, vorzugsweise von 3 bis 8 Äquivalentprozent, bezogen auf die Carboxylgruppen im Ausgangsgemisch, eingesetzt wird.

9. Verwendung der nach dem Verfahren von einem oder mehreren der Ansprüche 1 bis 8 erhaltenen Produkte für die Herstellung von luft-bzw. ofentrocknenden Beschichtungen, insbesondere in Kombination mit Polyisocyanaten und/oder Epoxidharzen, wobei zweckmäßig 0,5 bis 1,5 und vorzugsweise 0,8 bis 1,3 NCO- oder Epoxygruppen auf eine Hydroxylgruppe verwendet werden.

10. Überzugsmischung, gekennzeichnet durch einen Gehalt an einem Produkt, das nach dem Verfahren eines oder mehrerer der Ansprüche 1 bis 8 hergestellt ist.

**Revendications pour les Etats Contractants: AT, CH, GB, LI**

1. Procédé de préparation de copolymères porteurs de radicaux hydroxy et solubles dans des solvants organiques, par polymérisation et estérification a) d'acides carboxyliques à double liaison éthylénique en α, β avec b) des monomères éthyléniques copolymérisables et c) des composés époxydiques, à des températures élevées pouvant aller jusqu'à 150°C, en présence de catalyseurs de polymérisation et, avantageusement, de régulateurs, procédé caractérisé en ce qu'on utilise, comme composante c), le glycidol, c'est-à-dire le composé de formule:

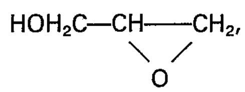

seul ou en mélange avec des esters glycidyliques qui contiennent de 12 à 19 atomes de carbone et qui dérivent d'acides gras saturés, le nombre de radicaux époxy étant au moins équivalent à celui des radicaux carboxy et la quantité, en équivalents, d'esters glycidyliques dans les mélanges étant au plus égale au double de celle du glycidol.

2. Procédé selon la revendication 1, caractérisé en ce que la composante c), qui est de préférence constituée de glycidol, se trouve déjà dans le mélange réactionnel au cours de la préparation des polymères.

3. Procédé selon l'une des revendications 1 et 2, caractérisé en ce que la réaction est effectuée dans l'intervalle de température allant de 80 à 150°C, de préférence de 100 à 140°C.

4. Procédé selon l'une quelconque des revendications 1 à 3, caractérisé en ce que la réaction est effectuée dans des solvants organiques et, de préférence, sans catalyseur d'estérification.

5. Procédé selon l'une quelconque des revendications 1 à 4, caractérisé en ce que la réaction est effectuée jusqu'à ce que le copolymère ait une teneur en radicaux hydroxy de 1,5 à 6,5% en poids, de préférence de 3,5 à 5,0% en poids, par rapport à la matière solide contenue dans le produit final.

6. Procédé selon l'une quelconque des revendications 1 à 5, caractérisé en ce que la composante b) est constituée, pour un maximum de 30% en poids, de comonomères hydroxylés, par rapport à la quantité de matière solide contenue dans le produit final.

7. Procédé selon l'une quelconque des revendications 1 à 6, caractérisé en ce que la composante a) est contenue, dans le produit final, en une proportion de 0,5 à 14% en poids, de préférence de 3 à 12% en poids.

8. Procédé selon l'une quelconque des revendications 1 à 7, caractérisé en ce que le glycidol, ou le mélange du glycidol et de l'ester glycidylique, est mis en jeu en un excès de 1 à 15 % en équivalents, de préférence de 3 à 8, relativement aux radicaux carboxy dans le mélange de départ.

9. Application des produits obtenus par un procédé selon l'une quelconque des revendications 1 à 8 pour la préparation de revêtements séchant à l'air ou au four, plus spécialement en association avec des poly-isocyanates et/ou des résines époxydiques, auquel cas il est bon d'utiliser de 0,5 à 1,5 radical -NCO ou époxy, de préférence de 0,8 à 1,3, par radical hydroxy.

10. Mélange pour révêtement, caractérisé en ce qu'il contient un produit qui a été préparé par un procédé selon l'une quelconque des revendications 1 à 8.

**Revendications pour l'Etat Contractant: DE**

1. Procédé de préparation de copolymères porteurs de radicaux hydroxy et solubles dans des solvants organiques, par polymérisation et estérification a) d'acides carboxyliques à double liaison éthylénique en α, β avec b) des monomères éthyléniques copolymérisables et c) des composés époxydiques, à des températures élevées pouvant aller jusqu'à 150°C, en présence de catalyseurs de polymérisation et, avantageusement, de régulateurs, procédé caractérisé en ce qu'on utilise, comme composante c), le glycidol, c'est-à-dire le composé de formule:

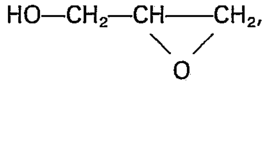

seul ou en mélange avec des esters glycidyliques qui contiennent de 12 à 19 atomes de carbone et qui dérivent d'acides gras saturés, le nombre de radicaux époxy étant au moins équivalent à celui des radicaux carboxy et la quantité, en équivalents, d'esters glycidyliques dans les mélanges étant au plus égale au double de celle du glycidol, cela avec exclusion du cas où, lorsu'on a recours à des catalyseurs d'estérification, la préparation de polyacrylates dépourvus de gel, porteurs de radicaux hydroxy, ayant une teneur en radicaux carboxy de 0,25 à 2,0% en poids et dérivant de produits d'estérification de copolymères, porteurs de radicaux carboxy, à base de motifs copolymérisés d'acide (méth)acrylique, de composés vinylaromatiques et d'acrylate ou de méthacrylate de glycidyle, en présence d'une catalyseur basique, à température élevée, est effectuée de la façon suivante:

on ajoute de 0,01 à 0,1% en poids d'une amine tertiaire aliphatique, cycloaliphatique ou hétérocyclique à 1 équivalent carboxylique d'un copolymère statistique (c'est-à-dire à motifs répartis de façon aléatoire) qui est constitué:

de 3 à 20% en poids d'acide méthacrylique et/ou d'acide acrylique,
de 50 à 90% en poids de styrène et/ou de méthacrylate de méthyle,
de 5 à 30% en poids d'une acrylate d'alkyle dont la composante alcool contient de 1 à 8 atomes de carbone, d'un méthacrylate d'alkyle dont la composante alcool contient de 2 à 8 atomes de carbone, ou de mélanges de ces esters acryliques et/ou méthacryliques

et qui a une masse moléculaire moyenne (déterminée par chromatographie sur gel) d'environ 3000 à 60000 et un indice d'hétérogénéite moléculaire U de 0,5 à 2,0, dissous dans un solvant organique, et on fait arriver progressivement dans ce mélange, en 0,2 à 10 heures, de 0,5 à 1,3 mol de glycidol, en continu ou en discontinu, à une température comprise entre 100 et 200°C puis on agite pendant encore 4 à 15 heures dans l'intervalle de température indiqué.

2. Procédé selon la revendication 1, caractérisé en ce que la composante c), qui est de préférence constituée de glycidol, se trouve déjà dans le mélange réactionnel au cours de la préparation des polymères.

3. Procédé selon l'une des revendications 1 et 2, caractérisé en ce que la réaction est effectuée dans l'intervalle de température allant de 80 à 150°C, de préférence de 100 à 140°C.

4. Procédé selon l'une quelconque des revendications 1 à 3, caractérisé en ce que la réaction est effectuée dans des solvants organiques et, de préférence, sans catalyseur d'estérification.

5. Procédé selon l'une quelconque des revendications 1 à 4, caractérisé en ce que la réaction est effecutée jusqu'à ce que le copolymère ait une teneur en radicaux hydroxy de 1,5 à 6,5% en poids, de préférence de 3,5 à 5,0% en poids, par

rapport à la matière solide contenue dans le produit final.

6. Procédé selon l'une quelconque des revendications 1 à 5, caractérisé en ce que la composante b) est constituée, pour un maximum de 30% en poids, de comonomères hydroxylés, par rapport à la quantité de matière solide contenue dans le produit final.

7. Procédé selon l'une quelconque des revendications 1 à 6, caractérisé en ce que la composante a) est contenue, dans le produit final, en une proportion de 0,5 à 14% en poids, de préférence de 3 à 12% en poids.

8. Procédé selon l'une quelconque des revendications 1 à 7, caractérisé en ce que le glycidol, ou le mélange du glycidol et de l'ester glycidylique, est mis en jeu en un excès de 1 à 15 % en équivalents, de préférence de 3 à 8, relativement aux radicaux carboxy dans le mélange de départ.

9. Application des produits obtenus par un procédé selon l'une quelconque des revendications 1 à 8 pour la préparation de revêtements séchant à l'air ou au four, plus spécialement en association avec des poly-isocyanates et/ou des résines époxydiques, auquel cas il est bon d'utiliser de 0,5 à 1,5 radical -NCO ou époxy, de préférence de 0,8 à 1,3, par radical hydroxy.

10. Mélange pour revêtement, caractérisé en ce qu'il conient un produit qui a été préparé par un procédé selon l'une quelconque des revendications 1 à 8.

**Claims for the Contracting States: AT, CH, GB, LI**

1. Process for preparing copolymers soluble in organic solvents and containing hydroxyl groups by polymerization and esterification of a) α, β-olefinically unsaturated carboxylic acids with b) olefinically unsaturated copolymerizable monomers and c) epoxy group-containing compounds, at elevated temperatures of up to 150°C, in the presence of polymerization catalysts and advantageously polymerization modifiers, characterized in that glycidol,

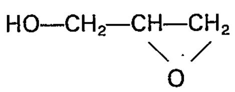

is used as component c), either alone or in a mixture with glycidyl esters with 12 to 19 carbon atoms and derived from saturated fatty acids, the number of epoxy groups being at least equivalent to the number of carboyxl groups, and in mixtures of glycidol with glycidyl esters, the number of equivalents of glycidyl esters is at most twice as great as the number of equivalents of glycidol.

2. Process according to claim 1, characterized in that component c), which preferably consists of glycidol, is already present in the reaction mixture during the polymerization.

3. Process according to claim 1 or 2, characterized in that the reaction is carried out at a temperature of from 80 to 150°C, preferably at from 100 to 140°C.

4. Process according to one or more of the claims 1 to 3, characterized in that the reaction is carried out in organic solvents and preferably without the use of esterification catalysts.

5. Process according to one or more of the claims 1 to 4, characterized in that the reaction is continued until the copolymer has a hydroxy group content of from 1.5 to 6.5, preferably from 3.5 to 5.0% by weight, based on the solids content in the end product.

6. Process according to one or more of claims 1 to 5, characterized in that component b) contains up to 30% by weight of comonomers containing hydroxyl groups, based on the solids content of the end product.

7. Process according to one or more of claims 1 to 6, characterized in that from 0.5 to 14, preferably from 3 to 12% by weight, of the end product are derived from component a).

8. Process according to one or more of claims 1 to 7, characterized in that the glycidol or the mixture with the glycidyl ester is used in an excess of 1 to 15, preferably 3 to 8 equivalent percent, based on the carboxyl groups in the starting mixture.

9. Use of the products obtained by the process as claimed in one or more of claims 1 to 8, for the preparation of air- or oven-drying coating compositions, particularly in combination with polyisocyanates and/or epoxy resins, appropriately in an amount such that 0.5 to 1.5, preferably 0.8 to 1.3 NCO or epoxy groups are present to one hydroxyl group.

10. A coating composition characterized by a content of a product of the process claimed in one or more of claims 1 to 9.

**Claims for the Contracting State: DE**

1. Process for preparing copolymers soluble in organic solvents and containing hydroxyl groups by polymerization and esterification of a) α, ß-olefinically unsaturated carboxylic acids with b) olefinically unsaturated copolymerisable monomers and c) epoxy group-containing compounds, at elevated temperatures of up to 150°C, in the presence of polymerization catalysts and advantageously polymerization modifiers, characterized in that glycidol,

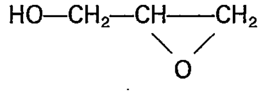

is used as component c), either alone or in a mixture with glycidyl esters with 12 to 19 carbon atoms and derived from saturated fatty acids, the number of epoxy groups being at least equivalent to the number of carboxyl groups, and in mixtures of glycidol with glycidyl esters, the number of equivalents of glycidyl esters is at most twice as great as the number of equivalents of glycidol, with the proviso, that the preparation

of polyacrylates with the use of esterification catalysts is excluded, said polyacrylates are free of gel particles, contain hydroxy groups, have a content of from 0.25 to 2.0% by weight of carboxylic groups and are prepared from esterification products of copolymers containing carboxylic groups, based on copolymerized units of (meth)acrylic acid, aromatic vinyl compounds and (meth)acrylic acid esters with glycidol in the presence of a basic catalyst at elevated temperature in such a way, that one carboxylic equivalent of a copolymer of copolymerized statistically distributed units of 3—20% by weight (meth)acrylic acid, 50—90% by weight styrene and/or methyl methacrylate, 5—30% by weight acrylic acid alkyl ester with 1 to 8 carbon atoms in the alcoholic component, methacrylic acid alkyl ester with 2 to 8 carbon atoms in the alcoholic component or mixtures of said (meth)acrylic acid esters, the copolymers have an average molecular weight of about 3000—60000 (determined by gel chromatography), a molecular nonuniformity U of 0.5—2.0 and being dissolved in an organic solvent, is mixed with 0.01 and 0.1% by weight of a tertiary aliphatic, cycloaliphatic or heterocyclic amine, to this mixture 0.5 to 1.3 moles of glycidol is measured continuously or discontinuously in a period of 0.2 to 10 hours at a temperature of from 100 to 200°C and then this mixture is stirred for 4 to 15 hours at temperatures as mentioned above.

2. Process according to claim 1, characterized in that component c), which preferably consists of glycidol, is already present in the reaction mixture during the polymerization.

3. Process according to claim 1 or 2, characterized in that the reaction is carried out at a temperature of from 80 to 150°C, preferably at from 100 to 140°C.

4. Process according to one or more of the claims 1 to 3, characterized in that the reaction is carried out in organic solvents and preferably without the use of esterification catalysts.

5. Process according to one or more of the claims 1 to 4, characterized in that the reaction is continued until the copolymer has a hydroxyl group content of from 1.5 to 6.5, preferably from 3.5 to 5.0% by weight, based on the solids content in the end product.

6. Process according to one or more of claims 1 to 5, characterized in that component b) contains up to 30% by weight of comonomers containing hydroxyl groups, based on the solids content of the end product.

7. Process according to one or more of claims 1 to 6, characterized in that from 0.5 to 14, preferably from 3 to 12% by weight, of the end product are derived from component a).

8. Process according to one or more of claims 1 to 7, characterized in that the glycidol or the mixture with the glycidyl ester is used in an excess of 1 to 15, preferably 3 to 8 equivalent percent, based on the carboxyl groups in the starting mixture.

9. Use of the products obtained by the process as claimed in one or more of claims 1 to 8, for the preparation of air- or oven-drying coating compositions, particularly in combination with polyisocyanates and/or epoxy resins, appropriately in an amount such that 0.5 to 1.5, preferably 0.8 to 1.3 NCO or epoxy groups are present to one hydroxyl group.

10. A coating composition characterized by a content of a product of the process claimed in one or more of claims 1 to 9.